# EUROPÄISCHE PATENTSCHRIFT

(11) **EP 1 307 094 B1**
(45) Veröffentlichungstag und Bekanntmachung des Hinweises auf die Patenterteilung: **04.02.2004**
(21) Anmeldenummer: 01957922.6
(22) Anmeldetag: 05.07.2001
(51) Int. Cl.: A01L 5/00

(54) **HUFEISENARTIGER, PLATTENFÖRMIGER HUFBESCHLAG AUS KUNSTSTOFF**
HORSE-SHOE TYPE, PLATE-SHAPED, PLASTIC HOOF FITTING
ARMATURE PLASTIQUE EN FORME DE PLAQUE DE TYPE FER A CHEVAL

(30) Priorität: 08.08.2000 DE 20013626 U; 23.01.2001 DE 20101172 U; 07.06.2001 DE 20109470 U
(43) Veröffentlichungstag der Anmeldung: 07.05.2003
(73) Patentinhaber: CERA Handelsgesellschaft mbH, 87600 Kaufbeuren (DE)
(72) Erfinder: RAFELD, Karl, 87499 Wildpoldsried (DE); OVNICEK, Gene, Penrose, CO 81240 (US)
(74) Vertreter: Kern, Wolfgang
(86) Internationale Anmeldenummer: PCT/EP2001/007725
(87) Internationale Veröffentlichungsnummer: WO 2002/011533

(56) Entgegenhaltungen:
- FR-A- 2 411 562
- US-A- 3 494 422

## Beschreibung

Die Erfindung betrifft einen hufeisenartigen, plattenförmigen Hufbeschlag aus Kunststoff, dessen beide Schenkel zur Anpassung an die Größe des Hufes mit einer Einrichtung zur Veränderung ihres gegenseitigen Abstandes in Form eines Verbindungssteges versehen sind, der mit den Schenkeln des Beschlags im Bereich ihrer Enden in Eingriff bringbar ist, wobei der Beschlag eine mit Profilkörpern versehene Lauffläche aufweist, der Verbindungssteg als flächendeckendes, separates Paßstück ausgebildet ist, das die Umrißform der Enden der Schenkel zu deren gegenseitiger Verbindung im wesentlichen vollständig ergänzt und selbst eine Umrißform aufweist, die in den Schenkelenden hinterschnittene Aussparungen in Form flächiger seitlicher Auswölbungen ausfüllt, wobei ferner das Paßstück in die Oberfläche bzw. Lauffläche der Schenkelenden einsetzbar und in ihr im wesentlichen vollständig integrierbar ist, um die Schenkelenden formschlüssig und kraftschlüssig miteinander verbunden zu halten und zwecks Austausches aus den Schenkelenden ausbaubar ist und wobei wenigstens einige der Profilkörper zur Bildung einer Vertiefung, in der jeweils wenigstens ein Hufnagel plazierbar ist, von einem Rand begrenzt sind.

Beschläge dieser Art sind beispielsweise aus der EP 893 057 bekannt. Diese bekannten Beschläge weisen im Strahlenbereich des Hufes mit Abstand voneinander getrennte Schenkel auf.

Eine im Bereich der weißen Linie des Hufes befindliche Lochreihe des Hufbeschlags dient zur Befestigung des Beschlags am Huf. Dieser bekannte Hufbeschlag kennzeichnet sich insbesondere durch die Möglichkeit der Anpassung an unterschiedliche Hufgrößen durch Spreizung der Schenkel des Beschlags im Bereich ihrer Enden in gewissem Umfang, wodurch eine Beschlaggröße für mehrere Hufgrößen geeignet ist, da die jeweils gewünschte Hufbeschlaggröße mittels zwischen den Schenkelenden benutzbarer stegförmiger Verbindungsmittel so gespreizt bzw. kontrahiert werden kann, daß die im Beschlag befindliche Lochreihe über der jeweiligen weißen Linie des Hufes zu liegen kommt. Die bekannten Verbindungsmittel sehen verschiedenartige Ausbildungen vor, so beispielsweise eine Lasche, deren loses Ende stufenlos einstellbar und durch Verschrauben, Verkleben oder Verschweißen an dem gegenüberliegenden anderen Schenlcelende befestigbar ist. Darüber hinaus werden auch zueinander verschiebbare Stegteile vorgeschlagen, die den Abstand zwischen den Schenkelenden des Hufbeschlags mit Hilfe einer Schraubverbindung überbrücken.

In jedem Fall sind die stegförmigen Verbindungsmittel bei der bekannten Konstruktion so geartet, daß sie die die Strahlöffnung begrenzenden Schenkelenden nur verbinden, jedoch nicht zu einem homogenen Verschluß dieser Enden führen, was bedeutet, daß die Verbindungsmittel in bezug auf die Längsachse des Hufbeschlags entweder asymmetrisch gestaltet sind und dabei auf einem der Schenkel aufliegen oder im Falle einer symmetrischen Ausbildung des Verbindungsstegs nur eine punktförmige Verbindung der Schenkelenden herstellen, wobei die Verbindung der Stege an den Schenkelenden mittels Verschraubung erfolgt, bei der in den Enden Gewindebohrungen vorgesehen werden, denen entsprechende Bohrungen in den Verbindungsstegen zugeordnet sind, in die entsprechende Schrauben eingeschraubt werden.

Darüber hinaus weisen die bekannten Hufbeschläge eine noppenartige Profilierung der Lauffläche auf, bestehend aus einzelnen Noppen, die durch Stege miteinander verbunden sind, wobei die Höhe der Stege geringer ist als die Höhe der Noppen. Durch diese Lauffläche soll der beschlagene Huf gegen Rutschen auf seiner Unterlage gesichert werden.

Es hat sich gezeigt, daß die Befestigung des Beschlags mit Hilfe bekannter Hufnägel, die eine genaue Justierung des Beschlags auf dem Huf dahingehend erfordert, daß die in den Huf einzuschlagenden Nägel die sogenannte weiße Linie des Hufes treffen, zeitaufwendig ist und nicht immer zielgenau ausgeführt werden kann, weil aufgrund der Elastizität des Kunststoffmaterials des Beschlags beim Einschlagen der Nägel mit einem Hammer die Nagelspitze oftmals dazu neigt, seitlich auszuweichen, so daß dann die weiße Linie nicht getroffen wird.

Ein der angesprochenen Gattung noch näher kommender Vorschlag, der in der veröffentlichten europäischen Patentanmeldung 00 109 538.9 gemacht wird, sieht die Verbindung der Schenkelenden des Hufbeschlags mittels eines Verbindungssteges in Form eines Paßstücks vor, das in in den Schenkelenden befindlichen Aussparungen in Form flächiger seitlicher Auswölbungen einsetzbar ist.

Durch Verwendung eines solchen Paßstücks zwischen den Schenkelenden des Hufbeschlags wird insbesondere erreicht, daß die Schenkelenden festgelegt werden, sich also unter Belastung in geringerem Maße spreizen, als dies der Fall ist, wenn als Verbindungsmittel der beiden Schenkelenden nur ein mehr oder weniger schmaler gerader oder gebogener Steg verwendet wird, an dem die Schenkelenden festgemacht werden. Das vorgeschlagene Paßstück, das die Schenkelenden formschlüssig verbinden kann und symmetrisch zur Längsachse des Hufbeschlags und damit zu den Schenkeln ausgebildet ist, hat den Vorteil, daß es den auf die Schenkelenden bei Benutzung des Hufbeschlags einwirkenden Kräften, die bestrebt sind, die Schenkelenden zu verformen, in der Weise entgegenwirkt, daß auf Grund der besonderen Umrißgestaltung des Paßstücks die von ihm ausgehenden Rückhaltekräne in eine wesentlich größere Querschnittsfläche der Schenkelenden übertragbar sind und daher zu einer geringeren Materialbeanspruchung der Schenkelenden führen, so daß der Verbindungssteg unter Belastung nicht mehr brechen kann. Letzteres ist insbesondere auch deshalb von Bedeutung, weil der Verformungswiderstand des Kunststoffmaterials unter dem Einfluß von Druck und Temperatur geringer ist als der des herkömmlichen Hufeisenmaterials, nämlich von Metall.

Darüber hinaus ermöglicht die Verwendung von Paßstücken als Verbindungsmittel eine relativ einfache Anpassung einer bestimmten Hufbeschlaggröße an unterschiedliche Hufe, insbesondere an unterschiedliche Lagen der sogenannten weißen Linie des Hufes, die allein zur Aufnahme von Befestigungsmitteln, beispielsweise Hufnägeln oder Schrauben, zur Verfügung steht. Dies bedeutet, mittels unterschiedlicher Paßstückgrößen läßt sich eine bestimmte Hufplattengröße in gewissen Grenzen im Strahlbereich aufweiten.

Trotz dieser augenscheinlichen Verbesserungen, die die bekannten bzw. vorgeschlagenen Hufbeschläge gegenüber den herkömmlichen Hufbeschlägen bieten, sollen erfindungsgemäß weitere Änderungen des Hufbeschlags vorgenommen werden, um Gesundheit und Leistungsfähigkeit der Beine bzw. Hufe von Pferden zu fördern, und zwar unter besonderer Berücksichtigung der natürlichen Hufhuiktion und der anatomischen Gestaltung des Pferdefußes, seiner Gewichtsaufnahme und Gewichtsverteilung sowie der Kraft- bzw. Belastungswirkungen, wobei unter anderem die Verhaltensweise von Wildpferden eine Rolle spielen soll.

Diese Aufgabe wird erfindungsgemäß dadurch gelöst, daß der die beiden Schenkel des Beschlags verbindende Kopfteil eine abgeflachte vordere Randkante und auf der Lauffläche des Beschlags einen sich beidseitig der Mittelachse des Beschlags bis im wesentlichen zum äußeren Rand der Schenkel erstreckenden Laufflächenteil aufweist, der frei von Profilkörpem ist und einen in Richtung auf die Schenkelenden zunehmenden, keilförmigen Querschnitt besitzt, der eine in die Mittelachse fallende Breite aufweist, die im Bereich der Mittelachse etwa der halben Breite des Kopfteils zwischen seiner vorderen Randkante und seiner hinteren Randkante entspricht, wobei sich innerhalb des Kopfteils an den profilkörperfreien Laufflächenteil ein mit noppenförmigen Profilkörpern besetzter Laufflächenteil anschließt.

Durch diese Ausbildung des Hufbeschlags wird insbesondere der Abrollvorgang der Bodenfläche des Hufbeschlags bei gleichzeitiger Reduzierung des Materialverschleißes verbessert in dem Sinne, daß die Hufbelastung und damit die auf den Pferdefuß einwirkenden Kräfte besser verteilt werden, wodurch Verletzungsgefahren an den Fußknochen bzw. Pferdebeinen sowie pathologische Verformungen des Knochengerüstes auch unter extremen Belastungen, wie sie beispielsweise bei Turnierpferden auftreten, erheblich reduziert werden können.

Gemäß einer vorteilhaften Ausgestaltung des Erfindungsvorschlags läßt sich die Haltbarkeit des Hufbeschlags weiter dadurch verbessern, daß der Verbindungssteg in in die Schenkelenden eingesetztem Zustand unter Zugspannung steht und nicht unter Druckspannung, da letztere zu einer Aufwölbung des Stegs führen kann.

Des weiteren hat es sich als vorteilhaft erwiesen, daß die Lauffläche des Beschlags, die sich an den die beiden Schenkel verbindenden Kopfteil anschließt, mit langlochförmigen Vertiefungen besetzt ist, die sich in Richtung der Breite der Schenkel erstrecken, durch hantelförmige Profilkörper voneinander getrennt sind und zur Aufnahme der Köpfe von Hufnägel dienen, die in die sogenannte weiße Linie des Hufs einzuschlagen sind.

Weitere vorteilhafte Ausgestaltungen sind in den Unteransprüchen gekennzeichnet.

Die Erfindung wird nachfolgend an Hand des in der Zeichnung dargestellten Ausfuhrungsbeispiels näher erläutert. In der Zeichnung zeigen:
- Fig. 1: eine Draufsicht der Unter- bzw. Bodenseite des Hufbeschlags mit eingebautem Paßstück,
- Fig. 2: eine Längsschnittansicht des Hufbeschlags von Fig. 1 längs der Linie A-A mit eingesetztem Verbindungssteg bzw. Paßstück,
- Fig. 3: eine geschnittene Detailansicht der Rundlochausbildung bei "C" in Fig. 1 und
- Fig. 4: eine Schnittansicht eines Schenkels längs der Linie B-B in Fig. 1.

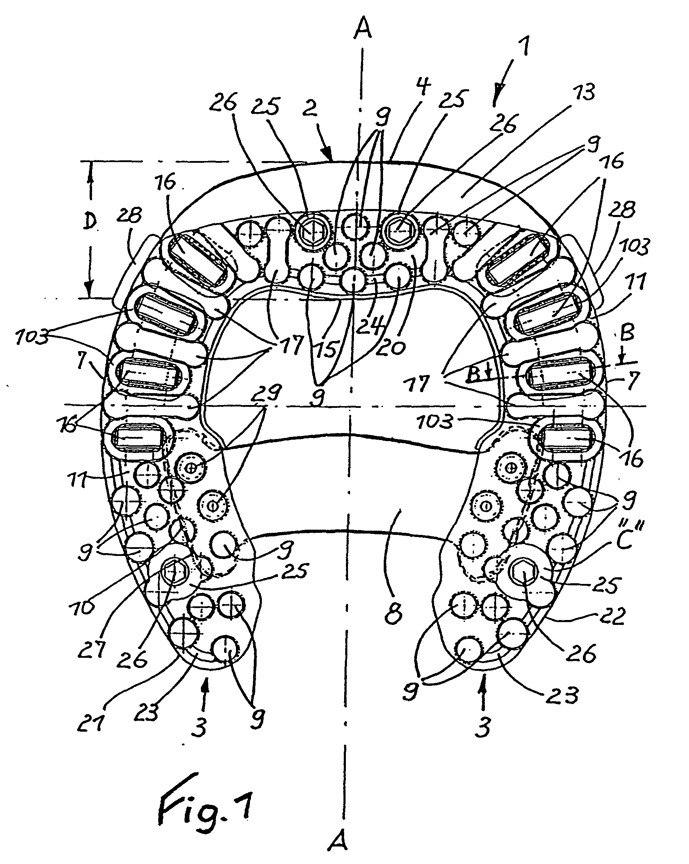

Der in Fig. 1 gezeigte plattenförmige Hufbeschlag 1 weist grundsätzlich die bekannte hufeisenförmige Konfiguration auf, d.h. er ist mit zwei Schenkeln 7 versehen, sowie zur Anpassung an die Größe des Hufs mit einer Einrichtung zur Veränderung ihres gegenseitigen Abstandes in Form eines Verbindungssteges 8, auch Distanzstück genannt, der mit den Schenkeln 7 des Beschlags im Bereich ihrer Enden 3 durch Einsetzen der beiden wulstförmigen Enden des Verbindungsstegs in entsprechend geformte Oberflächenausschnitte der Schenkel 7 im Bereich ihrer Enden 3 in Eingriff bringbar ist. Der Beschlag 1 weist eine mit noppenförmigen Profilkörpern 9 besetzte Lauffläche 11 auf, und der Verbindungssteg 8 ist als flächendeckendes, separates Paßstück ausgebildet ist, das die Umrißform der Enden der Schenkel 3 zu deren gegenseitiger Verbindung im wesentlichen vollständig ergänzt und selbst eine Umrißform 27 aufweist, die eine hinterschnittene Aussparung 10 in den Schenkelenden 3 in Form flächiger seitlicher Auswölbungen ausfüllt. Der Verbindungssteg 8 ist in die Oberfläche bzw. Lauffläche 11 der Schenkelenden 3 einsetzbar und in ihr im wesentlichen vollständig integrierbar, um die Schenkelenden formschlüssig und kraftschlüssig miteinander verbunden zu halten, läßt sich jedoch andererseits aus den Schenkelenden ausbauen, wenn der eingetretene Verschleiß dies erfordert. Wenigstens einige der Profilkörper 9 sind als hantelförmige Profilkörper 17 ausgebildet, zwischen denen sich langlochförmige Vertiefungen 16 befinden, in denen jeweils wenigstens ein nicht dargestellter Hufnagel plazierbar ist.

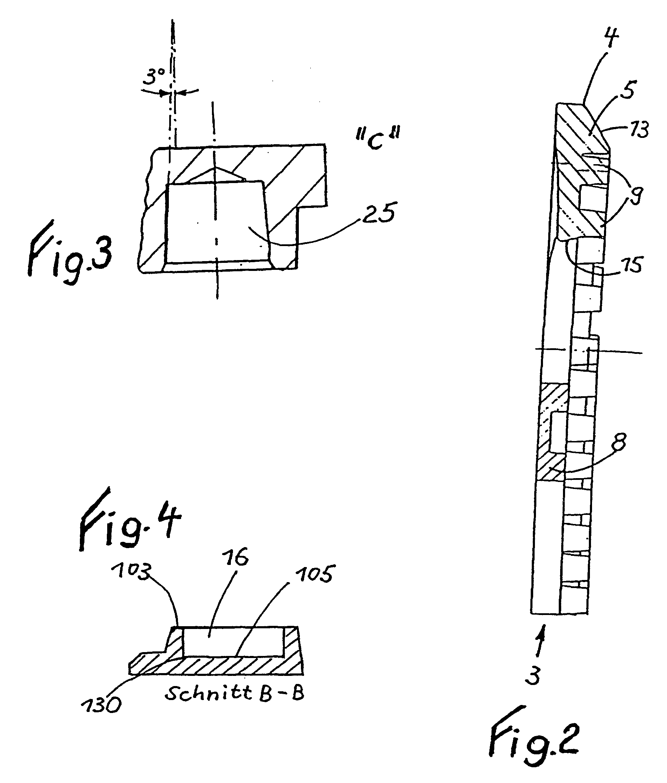

Wie aus Fig. 1 hervorgeht, hat der die beiden Schenkel 7 des Beschlags 1 verbindende Kopfteil 2 eine abgeflachte vordere Randkante 4 und auf der Lauffläche 11 des Beschlags einen sich beidseitig der Mittelachse A-A des Beschlags, im wesentlichen zum äußeren Rand der Schenkel 7 erstreckenden Laufflächenteil 13, der frei von Profilkörpern jeglicher Art, insbesondere noppenförmigen Profilkörpern 9 ist und einen in Richtung auf die Schenkelenden 3 zunehmenden, keilförmigen Querschnitt 5 besitzt, wie insbesondere aus Fig. 2 ersichtlich. Dieser Laufflächenteil 13 hat eine in die Mittelachse A-A fallende Breite D, die im Bereich dieser Mittelachse etwa der halben Breite des Kopfteils 2 zwischen seiner vorderen Randkante 4 und seiner hinteren Randkante 15 entspricht. Innerhalb des Kopfteils 2 schließt sich an den profilkörperfreien Laufflächenteil 13 ein mit noppenförmigen Profilkörpern 9 besetzter Laufflächenteil 20 an. Auf diesem Laufflächenteil sind die Profilkörper 9 in mehreren Reihen hintereinander gestaffelt und zumindest teilweise auf Lücke angeordnet, wobei die der Randkante 15 am nächsten liegenden noppenförmigen Profilkörper 9 durch einen Steg 24 miteinander verbunden sind.

Die noppenförmigen Profilkörper 9 weisen teilweise einen runden und teilweise einen hantelförmigen Querschnitt auf, wie aus Fig. 1 ersichtlich, und die Lauffläche 11 des Beschlags 1, die sich an den die beiden Schenkel 7 verbindenden Kopfteil 2 anschließt, ist mit langlochförmigen Vertiefungen 16 besetzt, welche sich in Richtung der Breite der Schenkel 7 erstrecken und durch die hantelförmigen Profilkörper 17 voneinander getrennt sind. In diesen Vertiefungen 16 werden, wie oben ausgeführt, die Köpfe von Hufnägeln aufgenommen, welche in die sogenannte weiße Linie des Hufs einzuschlagen sind, um den Beschlag 1 wie bei den üblichen Hufeisen an dem Pferdehuf zu befestigen.

Wie aus Fig. 1 ferner hervorgeht, befindet sich die in Richtung der Schenkelenden 3 letzte langlochförmige Vertiefung 16 noch vor dem Verbindungssteg 8, so daß dieser bzw. seine der ihn aufnehmende Schenkelteil nicht gestört wird.

Im Bereich der Schenkelenden 3 sind über die Breite und Länge der Schenkel 7 verteilte noppenförmige Profilkörper 9 auf der Lauffläche 11 vorgesehen, wobei die Anordnung so getroffen ist, daß diese Profilkörper in Richtung der Schenkelenden auf die langlochförmigen Vertiefungen 16 bzw. hantelförmigen Profilkörper 17 folgend angeordnet sind.

Zur Stabilisierung der am äußeren Rand des Beschlags befindlichen Profilkörper 9 sind diese durch einen Steg 23 miteinander verbunden, der dem Steg 24 an der Randkante 15 des Kopfteils 2 ähnlich ist, wobei zur Verhinderung von starker Verschmutzung der Lauffläche 11 die hintere Randkante 15, wie aus Fig. 1 ersichtlich, zweckmäßigerweise abgeschrägt ist.

Zwischen den mit 9 und 17 bezeichneten Profilkörpern befinden sich mehrere Rundlöcher 25 zur Aufnahme von Stollen 26, die erforderlichenfalls in diese Rundlöcher eingeschraubt werden, um die Trittsicherheit des Beschlags weiter zu verbessern. Dabei hat sich besonders bewährt, je eines dieser Rundlöcher 25 zu beiden Seiten der Mittelachse A-A im Kopfteil 2 des Beschlags anzuordnen, wenigstens ein weiteres dieser Rundlöcher in jedem der beiden Schenkelenden 3.

Die Größe bzw. Weite des Beschlags, d.h. insbesondere der gegenseitige Abstand der Schenkel 7, lassen sich an sich bekannter Weise mit Hilfe des separaten Verbindungsstegs 8 bzw. Paßstücks einstellen, wobei die Abmessungen des Verbindungsstegs so gewählt sind, daß die Schenkelenden 3 im eingesetzten Zustand des Verbindungsstegs unter Zugspannung stehen, da festgestellt wurde, daß unter Druckspannung stehende Schenkelenden zu einem Aufwerfen oder Aufwölben des Verbindungsstegs 8 mit der Folge eines unerwünschten Materialverschleißes führen können, wodurch der in der Regel aus Polyurethan bestehende Beschlag dann vorzeitig erneuert werden müßte.

Der Verbindungssteg 8 läßt sich beispielsweise, wie in Fig. 1 bei 28 angedeutet, mit den Schenkeln 7 bzw. deren Enden 3 verschrauben. Die seitlichen Aufzüge 28 am Beschlag 1 fördern dessen richtigen Sitz.

Die in den Figuren 3 und 4 ausschnittsweise dargestellten besonderen Ausbildungen sind hinsichtlich der Konfiguration des Rundlochs 25 und der langlochförmigen Vertiefung 16 von Bedeutung.

Die Rundlöcher 25 sind sich konusförmig zu dem zum Huf weisenden Lochende verjüngend ausgebildet. Die Rundlöcher haben eine glatte Innenwand, und der Kunststoff des Beschlags 1 weist zumindest im Bereich dieser Rundlöcher eine derartige Elastizität auf, daß die Stollen 26 fest in die Rundlöcher einschraubbar sind und beim Herausdrehen der Stollen aus den Rundlöchem keinen Gewindeabdruck hinterlassen. Der Elastizitätsmodul des Kunststoffs beträgt dabei 800 MPa. Der Konuswinkel der Rundlöcher liegt zwischen 2° und 5°, vorzugsweise bei 3°. Der Innendurchmesser der Rundlöcher an deren äußerem freien Ende, das dem zum Huf weisenden Ende gegenüberliegt, ist somit auf Grund der Konizität etwa 0,2 bis 0,3 mm größer als der Außendurchmesser des Gewindeabschnitts des Stollens 26.

Aus Fig. 4 ist ersichtlich, daß die langlochförmigen Vertiefungen 16 einen Boden 105 haben, dessen Dicke so gewählt ist, daß sie bei einem durchsichtigen oder durchscheinenden Kunststoffmaterial die weiße Linie des Hufs sichtbar werden läßt, über der die Vertiefungen 16 zu liegen kommen und in die die Hufnägel eingeschlagen werden, wenn der Hufbeschlag auf dem Huf befestigt wird.

Wie ferner aus Fig. 4 entnommen werden kann, weist der Boden 105 der langlochförmigen Vertiefungen 16 eine Dicke auf, die geringer ist als die Dicke des diese Vertiefungen umgebenden Kunststoffmaterials. In dem Boden kann wenigstens ein nicht eingezeichnetes Loch zur Aufnahme der Spitze bzw. des Schaftes eines Hufnagels angeordnet sein. Die Vertiefungen 16 sind von einem Rand 103 umgeben, dessen Höhe der Höhe eines Hufnagelkopfes entspricht, so daß der Hufnagelkopf vollständig in der Vertiefung versenkt werden kann. Die Länge der Vertiefungen 16 entspricht mindestens der doppelten Längenabmessung eines Hufnagelkopfes. Es versteht sich, daß der Rand 103 zweckmäßigerweise umlaufend ausgebildet ist.

Wie ferner ersichtlich, weisen die langlochförmigen Vertiefungen 16 einen konischen Querschnitt auf derart, daß der obere Rand 103 der Vertiefungen in bezug auf ihren unteren, den Boden 105 begrenzenden Rand 130 nach außen erweitert ist.

Die langlochförmigen Vertiefungen sind wenigstens im vorderen Bereich des Beschlags 1 beidseitig seiner Mittelachse A-A in gleichmäßigen Abständen angeordnet und befinden sich, wie aus Fig. 1 ersichtlich, im wesentlichen in der oberen Hufbeschlaghälfte.

Der Kunststoff, aus dem der Beschlag 1 besteht, ist vorteilhafterweise Polyurethan, kann jedoch auch Polyamid sein und erforderlichenfalls eine Materialverstärkung in Form von Glas-, Kohlenstoff- oder Metallfasern bzw. -fäden oder -körpern oder Mischungen aus diesen Bestandteilen enthalten, wobei zusätzlich zur weiteren Verbesserung der Festigkeit des Materials diese Fasern, Fäden und anderen Körper oder Mischungen aus diesen Bestandteilen in der Ebene des plattenförmigen Beschlags und damit parallel zur Hufbeschlagunterseite oder Hufbeschlagoberseite ausgerichtet, aber auch schräg oder rechtwinklig zur Ebene des plattenförmigen Beschlags ausgerichtet verlaufen können. Die Anordnung dieser Fasern, Fäden und anderen Körper innerhalb des Kunststoffmaterials kann gerichtet oder ungerichtet sein.

Im übrigen hat der Kopfteil 2 aufgrund seiner abgeflachten vorderen Randkante 4 bzw. seines keilförmigen Querschnitts 5, was die Gewichtsverteilung im Huf und die Sehnenbeanspruchung des Pferdebeines anbelangt, erhebliche Vorteile, die zur Gesunderhaltung des Pferdes bzw. zur Wiedergesundung eines erkrankten Pferdes, was dessen Fuß- und Beingelenke betrifft, wesentlich beitragen. Auch werden durch diese und andere oben beschriebenen Merkmale des Hufbeschlags die Abnutzung der Trachten entweder vollständig vermieden oder wesentlich gemindert, sowie die Stoßdämpfung verbessert und die Verletzungsgefahr des Pferdes verringert.

## Patentansprüche

1. Hufeisenartiger, plattenförmiger Hufbeschlag (1) aus Kunststoff, dessen beide Schenkel (7) zur Anpassung an die Größe des Hufes mit einer Einrichtung zur Veränderung ihres gegenseitigen Abstandes in Form eines Verbindungssteges (8) versehen sind, der mit den Schenkeln (7) des Beschlags im Bereich ihrer Enden (3) in Eingriff bringbar ist, wobei der Beschlag eine mit Profilkörpern (9) versehene Lauffläche (11) aufweist, der Verbindungssteg (8) als flächendeckendes, separates Paßstück ausgebildet ist, das die Umrißform der Schenkelenden (3) zu deren gegenseitiger Verbindung im wesentlichen vollständig ergänzt und selbst eine Umrißform aufweist, die in den Schenkelenden (3) hinterschnittene Aussparungen (10) in Form flächiger seitlicher Auswölbungen ausfüllt, wobei ferner das Paßstück in die Oberfläche bzw. Lauffläche (11) der Schenkelenden (3) einsetzbar und in ihr im wesentlichen vollständig integrierbar ist, um die Schenkelenden formschlüssig und kraftschlüssig miteinander verbunden zu halten und zwecks Austausches aus den Schenkelenden ausbaubar ist und wobei wenigstens einige der Profilkörper (9) zur Bildung einer Vertiefung, in der jeweils wenigstens ein Hufnagel plazierbar ist, von einem Rand begrenzt sind, **dadurch gekennzeichnet, daß** der die beiden Schenkel (7) des Beschlags (1) verbindende Kopfteil (2) eine abgeflachte vordere Randkante (4) und auf der Lauffläche (11) des Beschlags einen sich beidseitig der Mittelachse (A-A) des Beschlags bis im wesentlichen zum äußeren Rand der Schenkel (7) erstreckenden Laufflächenteil (13) aufweist, der frei von noppenförmigen Profilkörpern (9) ist und einen in Richtung auf die Schenkelenden (3) zunehmenden, keilförmigen Querschnitt (5) besitzt, der eine in die Mittelachse (A-A) fallende Breite (D) aufweist, die im Bereich der Mittelachse (A-A) etwa der halben Breite des Kopfteils (2) zwischen seiner vorderen Randkante (4) und seiner hinteren Randkante (15) entspricht, wobei sich innerhalb des Kopfteils (2) an den profilkörperfreien Laufflächenteil (13) ein mit noppenförmigen Profilkörpem (9) besetzter Laufflächenteil (20) anschließt.

2. Hufbeschlag nach Anspruch 1, **dadurch gekennzeichnet, daß** im Bereich der Schenkelenden (3) über die Breite und Länge der Schenkel (7) verteilte noppenförmige Profilkörper (9) auf der Lauffläche (11) angeordnet sind.

3. Hufbeschlag nach Anspruch 1 oder 2, **dadurch gekennzeichnet, daß** die noppenförmigen Profilkörper (9) in Richtung der Schenkelenden (3) auf die langlochförmigen Vertiefungen (16) bzw. hantelförmigen Profilkörper (17) folgend angeordnet sind.

4. Hufbeschlag nach einem der Ansprüche 1 - 3, **dadurch gekennzeichnet, daß** die den äußeren Randkanten (21, 22) der Schenkelenden (3) benachbarten noppenförmigen Profilkörper (9) durch einen Steg (23) verbunden sind.

5. Hufbeschlag nach einem der Ansprüche 1 - 4, **dadurch gekennzeichnet, daß** die noppenförmigen Profilkörper (9) in mehreren Reihen hintereinander gestaffelt und zumindest teilweise auf Lücke angeordnet sind.

6. Hufbeschlag nach einem der Ansprüche 1 - 5, **dadurch gekennzeichnet, daß** die noppenförmigen Profilkörper (9) teilweise einen runden und teilweise einen hantelförmigen Querschnitt aufweisen.

7. Hufbeschlag nach einem der Ansprüche 1 - 6, **dadurch gekennzeichnet, daß** die hintere Randkante (15) des Kopfteils (2) abgeschrägt ist.

8. Hufbeschlag nach einem der Ansprüche 1 - 7, **dadurch gekennzeichnet, daß** die der hinteren Randkante (15) des Kopfteils (2) am nächsten liegenden noppenförmigen Profilkörper (9) durch einen Steg (24) miteinander verbunden sind.

9. Hufbeschlag nach einem der Ansprüche 1 - 8, **dadurch gekennzeichnet, daß** zwischen den Profilkörpern (9, 17) mehrere Rundlöcher (25) zur Aufnahme von Stollen (26) angeordnet sind.

10. Hufbeschlag nach Anspruch 9, **dadurch gekennzeichnet, daß** sich wenigstens je eines dieser Rundlöcher (25) zu beiden Seiten der Mittelachse (A-A) im Kopfteil (2) des Beschlags befindet und wenigstens ein weiteres dieser Rundlöcher (25) in jedem der beiden Schenkelenden (3).

11. Hufbeschlag nach Anspruch 8 oder 9, **dadurch gekennzeichnet, daß** die Rundlöcher (25) eine glatte Innenwand haben und der Kunststoff des Beschlags (1) zumindest im Bereich der Rundlöcher eine derartige Elastizität aufweist, daß die Stollen (26) fest in die Rundlöcher (25) einschraubbar sind und beim Herausdrehen der Stollen aus den Rundlöchem kein Gewindeabdruck verbleibt.

12. Hufbeschlag nach einem der Ansprüche 9 - 11, **dadurch gekennzeichnet, daß** die Rundlöcher (25) sich konusförmig zu dem zum Huf weisenden Lochende verjüngend ausgebildet sind.

13. Hufbeschlag nach einem der Ansprüche 9 - 12, **dadurch gekennzeichnet, daß** die Rundlöcher (25) sackbohrungsartig ausgebildet sind.

14. Hufbeschlag nach einem der Ansprüche 1 - 13, **dadurch gekennzeichnet, daß** die Lauffläche (11) des Beschlags (1), die sich an den die beiden Schenkel (7) verbindenden Kopfteil (2) anschließt, mit langlochförmigen Vertiefungen (16) besetzt ist, die sich in Richtung der Breite der Schenkel (7) erstrecken, durch hantelförmige Profilkörper (17) voneinander getrennt sind und zur Aufnahme der Köpfe von Hufnägel dienen, die in die sogenannte weiße Linie des Hufs einzuschlagen sind.

15. Hufbeschlag nach Anspruch 14, **dadurch gekennzeichnet, daß** die in Richtung der Schenkelenden (3) letzte langlochförmige Vertiefung (16) noch vor dem Verbindungssteg (8) angeordnet ist.

16. Hufbeschlag nach Anspruch 14 oder 15, **dadurch gekennzeichnet, daß** der Boden (105) der langlochförmigen Vertiefungen (16) eine Dicke aufweist, die bei einem durchsichtigen oder durchscheinenden Kunststoffmaterial die weiße Linie des Hufes sichtbar werden läßt, über der die Vertiefungen (16) zu liegen kommen und in die die Hufnägel einschlagbar sind.

17. Hufbeschlag nach Anspruch 16, **dadurch gekennzeichnet, daß** der Boden (105) der langlochförmigen Vertiefungen (16) eine Dicke aufweist, die geringer ist als die Dikke zumindest des diese Vertiefungen (16) umgebenden Kunststoffmaterials.

18. Hufbeschlag nach Anspruch 16 oder 17, **dadurch gekennzeichnet, daß** sich im Boden (105) der langlochförmigen Vertiefungen (16) wenigstens ein Loch zur Aufnahme der Spitze bzw. des Schaftes eines Hufnagels befindet.

19. Hufbeschlag nach einem der Ansprüche 14 - 18, **dadurch gekennzeichnet, daß** die langlochförmigen Vertiefungen (16) von einem Rand (103) begrenzt sind.

20. Hufbeschlag nach Anspruch 19, **dadurch gekennzeichnet, daß** die Höhe des Randes (103) der langlochförmigen Vertiefungen (16) der Höhe eines Hufnagelkopfes entspricht.

21. Hufbeschlag nach Anspruch 19 oder 20, **dadurch gekennzeichnet, daß** der Rand (103) umlaufend ist.

22. Hufbeschlag nach einem der Ansprüche 14 - 20, **dadurch gekennzeichnet, daß** die Länge der langlochförmigen Vertiefungen (16) mindestens der doppelten Längenabmessung eines Hufnagelkopfes entspricht.

23. Hufbeschlag nach einem der Ansprüche 14 - 20, **dadurch gekennzeichnet, daß** die langlochförmigen Vertiefungen (16) wenigstens im vorderen Bereich des Beschlags (1) beidseitig seiner Mittelachse (A-A) in gleichmäßigen Abständen angeordnet sind.

24. Hufbeschlag nach einem der Ansprüche 14 - 23, **dadurch gekennzeichnet, daß** die langlochförmigen Vertiefungen (16) einen konischen Querschnitt aufweisen derart, daß der obere Rand (103) der Vertiefungen in bezug auf ihren unteren, den Boden (105) begrenzenden Rand (130) nach außen erweitert ist.

25. Hufbeschlag nach einem der Ansprüche 14 - 24, **dadurch gekennzeichnet, daß** die langlochförmigen Vertiefungen (16) im wesentlichen oder ausschließlich in der oberen Hufbeschlaghälfte angeordnet sind.

26. Hufbeschlag nach einem der Ansprüche 1 - 25, **dadurch gekennzeichnet, daß** der Elastizitätsmodul des Kunststoffs zumindest im Bereich der Rundlöcher (25) nicht mehr als 800 MPa beträgt.

27. Hufbeschlag nach einem der Ansprüche 12 - 20, **dadurch gekennzeichnet, daß** die konusförmige Ausbildung der Rundlöcher (25) zwischen 2° und 5°, vorzugsweise 3°, beträgt.

28. Hufbeschlag nach einem der Ansprüche 9 - 25, **dadurch gekennzeichnet, daß** der Innendurchmesser der Rundlöcher (25) an deren äußerem freien Ende, welches dem zum Huf weisenden Ende gegenüberliegt, etwa 0,2 bis 0,3 mm größer als der Außendurchmesser des Gewindeabschnitts des Stollens (26) ist.

29. Hufbeschlag nach einem der Ansprüche 1 - 28, **dadurch gekennzeichnet, daß** der Verbindungssteg (8) in in die Schenkelenden (3) eingesetztem Zustand unter Zugspannung steht.

30. Hufbeschlag nach einem der Ansprüche 1 - 29, **dadurch gekennzeichnet, daß** der Kunststoff, aus dem der Beschlag (1) besteht, Polyurethan ist.

31. Hufbeschlag nach einem der Ansprüche 1 - 29, **dadurch gekennzeichnet, daß** der Kunststoff Polyamid ist.

32. Hufbeschlag nach einem der Ansprüche 1 - 31, **dadurch gekennzeichnet, daß** der Kunststoff materialverstärkt ist.

33. Hufbeschlag nach Anspruch 32, **dadurch gekennzeichnet, daß** die Materialverstärkungen aus Glasfasern, -fäden, -körpern oder Mischungen derselben bestehen.

34. Hufbeschlag nach Anspruch 32, **dadurch gekennzeichnet, daß** die Materialverstärkungen aus Kohlenstoff-Fasern, -fäden, -körpern oder Mischungen dieser Bestandteile bestehen.

35. Hufbeschlag nach Anspruch 32, **dadurch gekennzeichnet, daß** die Materialverstärkungen aus Metallfasern, -fäden, -körpern oder Mischungen derselben bestehen.

36. Hufbeschlag nach einem der Ansprüche 33 - 35, **dadurch gekennzeichnet, daß** die Körper Kugelform aufweisen.

37. Hufbeschlag nach einem der Ansprüche 33 - 35, **dadurch gekennzeichnet, daß** die Fasern, Fäden, anderen Körper oder Mischungen aus diesen Bestandteilen in der Ebene des plattenförmigen Beschlages (1) und damit parallel zur Hufunterseite oder Hufoberseite ausgerichtet verlaufen.

38. Hufbeschlag nach einem der Ansprüche 33 - 35, **dadurch gekennzeichnet, daß** die Fasern, Fäden, anderen Körper oder Mischungen dieser Bestandteile in einer Ebene schräg oder rechtwinklig zur Ebene des plattenförmigen Beschlages (1) und damit zur Hufbeschlagunterseite oder Hufbeschlagoberseite ausgerichtet verlaufen.

39. Hufbeschlag nach einem der Ansprüche 33 - 35, **dadurch gekennzeichnet, daß** die Fasern, Fäden, anderen Körper oder Mischungen dieser Bestandteile im Kunststoffmaterial ungeordnet vorliegen.

## Claims

1. Horseshoe-like, plate-configured hoof pad (1) of plastic material having two legs (7), which can be adapted to the size of the hoof by means of changing their distance with respect to one another, having the form of a connecting bar (8) which can be engaged with the legs (7) of the pad in the area of their ends (3), which pad is provided with a running surface (11) covered by profile bodies (9) and the connecting bar (8) is configured as a surface covering, separate snug-fit-piece completing the circumference of the leg ends (3) essentially completely in order to connect them to each other and forming itself a circumferential configuration filling within the leg ends (3) back-cut-recesses (10) in form of flat, lateral bows, wherein moreover the snug-fit-piece can be inserted into the surface or, respectively, running surface (11) of the leg ends (3) in which it can be essentially completely integrated in order to keep the leg ends in configurational and force transmitting connection to one another and to make the snug-fit-piece for the purpose of exchange removable from the leg ends and wherein at least some of the profile bodies (9) are defined by a border in order to form a depression in each of which at least one hoof nail can be placed, **characterized in that** the head portion (2) connecting the two legs (7) of the pad (1) is provided with a flat front side edge (4) and a running face portion (13) on the running surface (11) of the pad extending on both sides of the center axis (A-A) of the pad up to essentially the outer edge of the legs (7), which running surface portion is free of nob-like profile bodies (9) and is provided with a wedge-like cross section (5) increasing in the direction to the leg ends (3) in order to provide in the center axis (A-A) a width (D) corresponding in the area of the center axis (A-A) about half of the width of the head portion (2) between its front side edge (4) and its rear edge (15). whereas within the head portion (2) the running surface portion (13) being free of profile bodies is followed by a running surface portion (20) covered by nob-like profile bodies (9).

2. Hoof pad according to claim 1, **characterized in that** in the area of the leg ends (3) extending over the width and length of the legs (7), nob-like profile bodies (9) are dispersed on the running surface (11).

3. Hoof pad according to claim 1 or 2, **characterized in that** the nob-like profile bodies (9) are following in the direction of the leg ends (3) to the slot-like depression (16) or, respectively, dumb-bell-like profile bodies (17).

4. Hoof pad according to one of the claims 1 - 3, **characterized in that** the nob-like profile bodies (9) adjacent to the outer border edges (21, 22) of the leg ends (3) are connected by a bar (23).

5. Hoof pad according to one of the claims 1 - 4, **characterized in that** the nob-like profile bodies (9) are arranged in several lines behind one another and at least partly in an alternating manner.

6. Hoof pad according to one of the claims 1 - 5, **characterized in that** each nob-like profile body (9) is provided partly with a round cross section and partly with a dumb-bell-like cross section.

7. Hoof pad according to one of the claims 1 - 6, **characterized in that** the backside border edge (15) of the head portion (2) is slanted.

8. Hoof pad according to one of the claims 1 - 7, **characterized in that** those nob-like profile bodies (9) which are at nearest positioned to the backside border edge (15) of the head portion (2) are connected by a bar (24).

9. Hoof pad according to one of the claims 1 - 8, **characterized in that** several rounded holes (25) are located for the reception of pins (26) between the profile bodies (9, 17).

10. Hoof pad according to claim 9, **characterized in that** at least some of these rounded holes (25) are arranged on both sides of the center axis (A-A) of the head portion (2) of the pad and that at least a further one of these rounded holes (25) is located in each of the two leg ends (3).

11. Hoof pad according to claim 8 or 9, **characterized in that** the rounded holes (25) provide a smooth inner wall and that the plastic material of the pad (1) is at least in the area of the rounded holes so elastical, that the pins (26) can be strongly screwed into the rounded holes (25) leaving no thread print if they are extracted from the rounded holes.

12. Hoof pad according to one of the claims 9 - 11, **characterized in that** the rounded holes (25) are conically tapering in direction to the hole end adjacent to the hoof tapering.

13. Hoof pad according to one of the claims 9 - 12, **characterized in that** the rounded holes (25) are configured as lined holes.

14. Hoof pad according to one of the claims 1 - 13, **characterized in that** the running surface (11) of the pad (1) adjacent to the head portion (2) connecting two legs (7) provided with slot-like depressions (16) extending in the direction of the width of the legs (7) and separated from one another by dumb-bell-like profile bodies (17) and provided for the reception of the heads of hoof nails which are to be hammered into the so-called white line of the hoof

15. Hoof pad according to claim 14, **characterized in that** the last slot-like depression (16) located in the direction of the leg ends (3) is arranged just in front of the connection bar (8)

16. Hoof pad according to claim 14 or 15, **characterized in that** the bottom (105) of the slot-like depressions (16) comprises a thickness making in case of clear or transparent plastic material the white line of the hoof visible, on which white line the depressions (16) can be positioned into which the hoof nails are hammered

17. Hoof pad according to claim 16, **characterized in that** the bottom (105) of the slot-like depressions (16) comprises a thickness which is smaller than the thickness at least of the plastic material surrounding these depressions (16).

18. Hoof pad according to claim 16 or 17, **characterized in that** within the bottom (105) of the slot-like depressions (16) is provided at least one hole for the reception of the tip or, respectively, the shaft of a hoof nail.

19. Hoof pad according to one of the claims 14 - 18, **characterized in that** the slot-like depressions (16) are defined by a border (103).

20. Hoof pad according to claim 19, **characterized in that** the height of the border (103) of the slot-like depressions (16) corresponds to the height of a hoof nail head.

21. Hoof pad according to claim 19 or 20, **characterized in that** the border (103) is contineously surrounding the depression.

22. Hoof pad according to one of the claims 14 - 20, **characterized in that** the length of the slot-like depressions (16) corresponds at least twice the length of a hoof nail head.

23. Hoof pad according to one of the claims 14 - 20, **characterized in that** the slot-like depressions (16) are arranged in equal distances on both sides of the center axis (A-A) at least in the front area of pad (1).

24. Hoof pad according to one of the claims 14 - 23, **characterized in that** the slot-like depressions (16) comprise a conical cross section of the kind that the upper border (103) of the depressions is extended outwardly with respect to their lower border (130) defining the bottom (105).

25. Hoof pad according to one of the claims 14 - 24, **characterized in that** the slot-like depressions (16) are located essentially or exclusively in the upper half of the hoof pad.

26. Hoof pad according to one of the claims 1 - 25, **characterized in that** the elasticity module of the plastic material does not exceed 800 MPa at least in the area of the rounded holes (25).

27. Hoof pad according to one of the claims 12 - 20, **characterized in that** the conical configuration of the rounded holes (25) comprises 2° and 5°, preferably 3°.

28. Hoof pad according to one of the claims 9 - 25, **characterized in that** the inside diameter of the rounded holes (25) is at their outer free end opposite to the end adjacent to the hoof about 0.2 to 0.3 mm greater, than the outside diameter of the thread portion of pins (26).

29. Hoof pad according to one of the claims 1 - 28, **characterized in that** the connecting bar (8) is under tension after it has been mounted in the leg ends.

30. Hoof pad according to one of the claims 1 - 29, **characterized in that** the plastic material of the pad (1) is polyurethane.

31. Hoof pad according to one of the claims 1 - 29, **characterized in that** the plastic material is polyamide.

32. Hoof pad according to one of the claims 1 - 31, **characterized in that** the plastic material is reinforced by other material.

33. Hoof pad according to claim 32, **characterized in that** the reinforcing material comprises fibers, threads, bodies or mixtures thereof of glass.

34. Hoof pad according to claim 32, **characterized in that** the reinforcing material comprises fibers, threads, bodies or mixtures thereof of carbon.

35. Hoof pad according to claim 32, **characterized in that** the reinforcing material comprises fibers, threads, bodies or mixtures thereof of metal.

36. Hoof pad according to one of the claims 33 - 35, **characterized in that** the bodies have the configuration of bails.

37. Hoof pad according to one of the claims 33 - 35, **characterized in that** the fibers, threads, other bodies or mixtures thereof are arranged in alignment within the level of the plate-like pad (1) and thus parallel with respect to the lower side of the hoof or upper side of the hoof

38. Hoof pad according to one of the claims 33 - 35, **characterized in that** the fibers. threads, other bodies or mixtures thereof are aligned in a level inclined or rectangular to the level of the plate-like pad (1) and thus to the lower side of the hoof pad or upper side of the hoof pad.

39. Hoof pad according to one of the claims 33 - 35, **characterized in that** the fibers, threads, other bodies or mixtures thereof are disorderly arranged within the plastic material.

## Revendications

1. Ferrure en forme de plaque (1), de type fer à cheval, en matière plastique, dont les deux branches (7) sont munies d'un dispositif en forme de barrette de connexion (8) permettant de modifier leur écartement mutuel en vue d'une adaptation à la taille du sabot, la barrette pouvant être engagée dans les branches (7) de la ferrure au niveau de ses extrémités (3), la ferrure présentant une surface portante (11) munie d'éléments profilés (9), la barrette de connexion (8) étant réalisée comme une pièce d'ajustage couvrante, séparée, qui complète de façon substantiellement complète le contour des extrémités de branche (3) en vue de leur connexion mutuelle et présente à son tour un contour qui remplit des évidements (10) dépouillés dans les extrémités de branche (3) sous forme de bossages latéraux plans, la pièce d'ajustage pouvant en outre être insérée dans la surface ou la surface portante (11) des extrémités de branche (3) et y être intégrée de façon substantiellement complète afin de maintenir les extrémités de branche connectées ensemble par engagement positif et par adhérence, et pouvant être démontée à partir des extrémités de branche en vue d'un remplacement, et au moins certains des éléments profilés (9) étant délimités par un bord pour former un renfoncement dans lequel au moins un clou de ferrure peut être placé, **caractérisée en ce que** la pièce de tête (2) reliant les deux branches (7) de la ferrure (1) présente une arête de bord avant aplatie (4) et une pièce de surface portante (13) sur la surface portante (11) de la ferrure s'étendant des deux côtés de l'axe médian (A-A) de la ferrure substantiellement jusqu'au bord extérieur des branches (7), la pièce de surface portante étant exempte d'éléments profilés en forme de picots (9) et possédant une section transversale (5) en biseau augmentant en direction des extrémités de branche (3), la section présentant une largeur (D) tombant sur l'axe médian (A-A) qui correspond au niveau de l'axe médian (A-A) approximativement à la demi-largeur de la pièce de tête (2) entre son arête de bord avant (4) et son arête de bord arrière (15), une pièce de surface portante (20) remplie d'éléments profilés en forme de picots (9) jouxtant la pièce de surface portante exempte d'éléments profilés (13) à l'intérieur de la pièce de tête (2).

2. Ferrure selon la revendication 1, **caractérisée en ce qu'**au niveau des extrémités de branche (3), des éléments profilés en forme de picots (9), répartis sur la largeur et la longueur des branches (7), sont disposés sur la surface portante (11).

3. Ferrure selon la revendication 1 ou 2, **caractérisée en ce que** les éléments profilés en forme de picots (9) sont disposés en direction des extrémités de branche (3) à la suite des renfoncements en forme de trou oblong (16) ou des éléments profilés en forme d'haltère (17).

4. Ferrure selon l'une quelconque des revendications 1 à 3, **caractérisée en ce que** les éléments profilés en forme de picots (9), voisins des arêtes de bord extérieures (21, 22) des extrémités de branche (3), sont reliés par une barrette (23).

5. Ferrure selon l'une quelconque des revendications 1 à 4, **caractérisée en ce que** les éléments profilés en forme de picots (9) sont échelonnés les uns après les autres en plusieurs rangées et sont disposés au moins en partie en quinconce.

6. Ferrure selon l'une quelconque des revendications 1 à 5, **caractérisée en ce que** les éléments profilés en forme de picots (9) présentent au moins en partie une section transversale ronde et en partie en forme d'haltère.

7. Ferrure selon l'une quelconque des revendications 1 à 6, **caractérisée en ce que** l'arête de bord arrière (15) de la pièce de tête (2) est chanfreinée.

8. Ferrure selon l'une quelconque des revendications 1 à 7, **caractérisée en ce que** les éléments profilés en forme de picots (9) les plus proches de l'arête de bord arrière (15) de la pièce de tête (2) sont reliés ensemble par une barrette (24).

9. Ferrure selon l'une quelconque des revendications 1 à 8, **caractérisée en ce qu'**entre les éléments profilés (9, 17), plusieurs étampures rondes (25) sont disposées pour recevoir des crampons (26).

10. Ferrure selon la revendication 9, **caractérisée en ce qu'**au moins respectivement l'une desdites étampures rondes (25) se trouve des deux côtés de l'axe médian (A-A) dans la pièce de tête (2) de la ferrure et au moins une autre desdites étampures rondes (25) se trouve dans chacune des deux extrémités de branche (3).

11. Ferrure selon la revendication 8 ou 9, **caractérisée en ce que** les étampures rondes (25) présentent une paroi intérieure lisse et la matière plastique de la ferrure (1) présente au moins au niveau des étampures rondes une élasticité telle que les crampons (26) peuvent être vissés solidement dans les étampures rondes (25) et qu'après le dévissage des crampons des étampures rondes il ne reste aucune trace de filetage.

12. Ferrure selon l'une quelconque des revendications 9 à 11, **caractérisée en ce que** les étampures rondes (25) sont réalisées en s'amenuisant de façon conique en direction de l'extrémité d'étampure orientée vers le sabot.

13. Ferrure selon l'une quelconque des revendications 9 à 12, **caractérisée en ce que** les étampures rondes (25) sont réalisées comme des trous borgnes.

14. Ferrure selon l'une quelconque des revendications 1 à 13, **caractérisée en ce que** la surface portante (11) de la ferrure (1) jouxtant la pièce de tête (2) reliant les deux branches (7) est remplie de renfoncements en forme de trou oblong (16) qui s'étendent en direction de la largeur des branches (7), séparés les uns des autres par des éléments profilés en forme d'haltère (17) et servant à recevoir les têtes de clous de ferrure qui sont à planter dans la ligne dite blanche du sabot.

15. Ferrure selon la revendication 14, **caractérisée en ce que** le dernier renfoncement en forme de trou oblong (16) en direction des extrémités de branche (3) est encore disposé avant la barrette de connexion (8).

16. Ferrure selon la revendication 14 ou 15, **caractérisée en ce que** le fond (105) des renfoncements en forme de trou oblong (16) présente une épaisseur qui permet avec une matière plastique transparente ou translucide de visualiser la ligne blanche du sabot au-dessus de laquelle les renfoncements (16) viennent se placer et dans laquelle les clous de ferrure peuvent être plantés.

17. Ferrure selon la revendication 16, **caractérisée en ce que** le fond (105) des renfoncements en forme de trou oblong (16) présente une épaisseur qui est inférieure à l'épaisseur au moins de la matière plastique entourant ces renfoncements (16).

18. Ferrure selon la revendication 16 ou 17, **caractérisée en ce que** dans le fond (105) des renfoncements en forme de trou oblong (16), il y a au moins un trou pour recevoir la pointe ou la tige d'un clou de ferrure.

19. Ferrure selon l'une quelconque des revendications 14 à 18, **caractérisée en ce que** les renfoncements en forme de trou oblong (16) sont délimités par un bord (103).

20. Ferrure selon la revendication 19, **caractérisée en ce que** la hauteur du bord (103) des renfoncements en forme de trou oblong (15) correspond à la hauteur d'une tête de clou de ferrure.

21. Ferrure selon la revendication 19 ou 20, **caractérisée en ce que** le bord (103) est périphérique.

22. Ferrure selon l'une quelconque des revendications 14 à 20, **caractérisée en ce que** la longueur des renfoncements en forme de trou oblong (15) correspond au moins au double de la dimension longitudinale d'une tête de clou de ferrure.

23. Ferrure selon la revendication 14 à 20, **caractérisée en ce que** les renfoncements en forme de trou oblong (16) sont disposés à intervalles réguliers au moins dans la partie avant de la ferrure (1) des deux côtés de son axe médian (A-A).

24. Ferrure selon l'une quelconque des revendications 14 à 23, **caractérisée en ce que** les renfoncements en forme de trou oblong (16) présentent une section transversale conique de telle sorte que le bord supérieur (103) des renfoncements est élargi vers l'extérieur par rapport à son bord inférieur (130) délimitant le fond (105).

25. Ferrure selon l'une quelconque des revendications 14 à 24, **caractérisée en ce que** les renfoncements en forme de trou oblong (16) sont disposés substantiellement ou exclusivement dans la moitié supérieure de la ferrure.

26. Ferrure selon l'une quelconque des revendications 1 à 25, **caractérisée en ce que** le module d'élasticité de la matière plastique n'est pas supérieur à 800 MPa, au moins au niveau des étampures rondes (25).

27. Ferrure selon l'une quelconque des revendications 12 à 20, **caractérisée en ce que** la réalisation de forme conique des étampures rondes (25) correspond à 2° à 5°, de préférence à 3°.

28. Ferrure selon l'une quelconque des revendications 9 à 25, **caractérisée en ce que** le diamètre intérieur des étampures rondes (25), à leur extrémité libre extérieure opposée à l'extrémité tournée vers le sabot, est supérieur de 0,2 à 0,3 mm au diamètre extérieur de la section filetée du crampon (26).

29. Ferrure selon l'une quelconque des revendications 1 à 26, **caractérisée en ce que** la barrette de connexion (8) est sous contrainte de traction à l'état inséré dans les extrémités de branche (3).

30. Ferrure selon l'une quelconque des revendications 1 à 29, **caractérisée en ce que** la matière plastique dont se compose la ferrure (1) est du polyuréthane.

31. Ferrure selon l'une quelconque des revendications 1 à 29, **caractérisée en ce que** la matière plastique est du polyamide.

32. Ferrure selon l'une quelconque des revendications 1 à 31, **caractérisée en ce que** la matière plastique est renforcée.

33. Ferrure selon la revendication 32, **caractérisée en ce que** les renforcements de matière se composent de fibres, de filaments, d'éléments de verre ou de mélanges de ceux-ci.

34. Ferrure selon la revendication 32, **caractérisée en ce que** les renforcements de matière se composent de fibres, de filaments, d'éléments de carbone ou de mélanges de ces composants.

35. Ferrure selon la revendication 32, **caractérisée en ce que** les renforcements de matière se composent de fibres, de filaments, d'éléments métalliques ou de mélanges de ceux-ci.

36. Ferrure selon l'une quelconque des revendications 33 à 35, **caractérisée en ce que** les éléments présentent une forme sphérique.

37. Ferrure selon l'une quelconque des revendications 33 à 35, **caractérisée en ce que** les fibres, les filaments, les autres éléments ou les mélanges de ces composants s'étendent dans le plan de la ferrure en forme de plaque (1) et donc en parallèle à la face inférieure du sabot ou à la face supérieure du sabot.

38. Ferrure selon l'une quelconque des revendications 33 à 35, **caractérisée en ce que** les fibres, les filaments, les autres éléments ou les mélanges de ces composants s'étendent dans un plan incliné ou perpendiculaire au plan de la ferrure en forme de plaque (1) et donc de façon alignée sur la face inférieure de la ferrure ou la face supérieure de la ferrure.

39. Ferrure selon l'une quelconque des revendications 33 à 35, **caractérisée en ce que** les fibres, les filaments, les autres éléments ou les mélanges de ces composants sont présents de façon aléatoire dans la matière plastique.
